# EUROPÄISCHE PATENTSCHRIFT

(11) **EP 1 622 753 B1**
(45) Veröffentlichungstag und Bekanntmachung des Hinweises auf die Patenterteilung: **15.08.2007**
(21) Anmeldenummer: 04727242.2
(22) Anmeldetag: 14.04.2004
(51) Int. Cl.: B29C 45/00, B29C 45/16, F16B 21/02, F16B 19/10

(54) **VERFAHREN ZUR HERSTELLUNG VON VERBINDUNGSSYSTEMEN UND NACH DIESEM VERFAHREN HERGESTELLTE VERBINDUNGSSYSTEME**
METHOD FOR THE PRODUCTION OF CONNECTION SYSTEMS, AND CONNECTION SYSTEMS PRODUCED ACCORDING TO SAID METHOD
PROCEDE DE FABRICATION DE SYSTEMES DE LIAISON ET SYSTEMES DE LIAISON FABRIQUES SELON LEDIT PROCEDE

(30) Priorität: 30.04.2003 DE 10319756
(43) Veröffentlichungstag der Anmeldung: 08.02.2006
(60) Teilanmeldung: 06024251.8
(73) Patentinhaber: A. RAYMOND ET CIE, 38000 Grenoble (FR)
(72) Erfinder: LEGAT, Jean-Jacques, F-38690 Colombe (FR); BLANC, Jérôme, F-38950 Saint Martin le Vinoux (FR)
(74) Vertreter: Rüttgers, Joachim
(86) Internationale Anmeldenummer: PCT/EP2004/003909
(87) Internationale Veröffentlichungsnummer: WO 2004/096518

(56) Entgegenhaltungen:
- DE-A- 19 920 689
- US-A- 3 964 364
- US-A- 5 551 817
- US-A- 5 647 713
- US-A1- 2002 185 778
- THOMA H: "RATIONALISIEREN DURCH MEHRKOMPONENTEN-SPRITZGIESSEN" KUNSTSTOFFE, CARL HANSER VERLAG. MUNCHEN, DE, Bd. 78, Nr. 8, August 1988 (1988-08), Seiten 665-669, XP001173613 ISSN: 0023-5563

## Beschreibung

Die Erfindung betrifft ein Verbindungssystem gemäß dem Oberbegriff des Patentanspruches 1.

Ein derartiges Verbindungssystem ist aus US-A-3,964,364 bekannt. Das vorbekannte Verbindungssystem verfügt über ein inneres und ein äußeres Kunststoffteil, die funktional relativ zueinander drehbeweglich sind. Das innere Kunststoffteil ist ein Kern für das äußere Kunststoffteil. Die Kunststoffteile sind aus einem einheitlichen Material hergestellt und vor Gebrauch mittels einer Naht miteinander verbunden. Das Kunststoffmaterial des äußeren Kunststoffteiles und des inneren Kunststoffteiles ist nicht ahärent, wobei das äußere Kunststoffteil ein Ankerteil und das innere Kunststoffteil ein zu dem Ankerteil verdrehbares inneres Zapfenteil ist. Das Ankerteil weist einen Zapfen des Zapfenteils fassende Klauen auf, die durch eine Drehung des Zapfenteils relativ zu dem Ankerteil elastisch spreizbar sind.

Aus dem Artikel von H. Thoma, "Rationalisieren durch Mehrkomponenten-Spritzgießen", Kunststoffe, Karl-Hanser-Verlag, München, Deutschland, Band 78, Nr. 8, August 1988 (988-08), Seiten 665 bis 669, XP001173613 ISSN: 0023-5563, ist bekannt, ein äußeres Kunststoffteil und ein inneres Kunststoffteil aus verschiedenen Kunststoffmaterialien herzustellen, damit diese nicht aneinander haften.

Der Erfindung liegt die Aufgabe zugrunde, bei einem Befestigungssystem der eingangs genannten Art eine leichte Handhabung und ein sicheres Befestigen zu schaffen.

Insbesondere ist ein Verbindungssystem zu schaffen, bei dem die Teile nicht nur zusammenhängen, sondern schon vor der ersten Verwendung eine echte Einheit und zumindest beim Ersteinsatz ein quasi einstückiges Verbindungsmittel bilden und dieses als solches zu handhaben ist. Es muss an Verbindungsstellen eingesetzt werden können, die nur von einer Seite der zu verbindenden Bauteile zugänglich sind. Die Verbindung soll im Vergleich zum Stand der Technik leichter und in weniger Arbeitsschritten, also zeitsparend, herstellbar und wieder lösbar sein, ohne dass Beschädigungen am Verbindungssystem selbst oder den zu verbindenden Bauteilen entstehen können. Danach soll die Wiederherstellung der Verbindung bzw. die Wiederverwendung des Systems an anderer Stelle genauso unkompliziert möglich sein.

Diese Aufgabe wird bei einem Befestigungssystem der eingangs genannten Art erfindungsgemäß mit den kennzeichnenden Merkmalen des Patentanspruches 1 gelöst.

Durch die erfindungsgemäße Ausgestaltung des Verbindungssystems ergibt sich durch die Wahl unterschiedlicher Materialien für die Kunststoffteile, dass die Handhabung verhältnismäßig leicht und eine sichere Befestigung geschaffen ist.

Bevorzugt besteht das Ankerteil aus einer Scheibe, von der nach unten zwei einander gegenüberstehende Klauen abragen, zwischen denen der Zapfen des verdrehbaren Zapfenteils gefasst ist, wobei der Zapfen einen rechteckigen Querschnitt aufweist.

Es ist von Vorteil, wenn die Verdrehbarkeit des Zapfenteils relativ zum Ankerteil durch Anschläge auf 90° begrenzt ist. Damit kann der Zapfen sicher in eine der beiden Stellungen gebracht werden, in deren einer Grundstellung die Klauen nicht gespreizt und in deren anderer die Klauen gespreizt sind.

Dazu können an der Oberseite der Scheibe des Ankerteils einer Kreislinie folgende Fortsätze angeformt sein, die die Verdrehbarkeit des Zapfenteils begrenzende Anschläge für am Zapfenteil ausgebildete Stopper bieten.

Die Erfindung wird im folgenden anhand der anhängenden Zeichnung beispielhaft näher beschrieben, es zeigen
- Fig. 1: eine perspektivische Darstellung eines ersten erfindungsgemäßen Verbindungssystems,
- Fig. 2: eine perspektivische Darstellung des Ankerteils des Verbindungssystems nach Fig. 1,
- Fig. 3: die Ansicht auf die Breitseite des Ankerteils nach Fig. 2,
- Fig. 4: die Ansicht auf die Schmalseite des Ankerteils nach Fig. 2,
- Fig. 5: eine perspektivische Darstellung des Zapfenteils des Verbindungssystems nach Fig. 1,
- Fig. 6: eine Seitenansicht des Zapfenteils nach Fig. 5,
- Fig. 7: eine gegenüber Fig. 6 um 90° gedrehte Seitenansicht des Zapfenteils nach Fig. 5,
- Fig. 8: eine erste perspektivische Darstellung eines zweiten erfindungsgemäßen Verbindungssystems,
- Fig. 9: eine zweite perspektivische Darstellung des Verbindungssystems nach Fig.8,
- Fig. 10: eine erste Seitenansicht des Verbindungssystems nach Fig. 8,
- Fig. 11: eine gegenüber Fig. 10 um 90° gedrehte Seitenansicht des Verbindungssystems nach Fig. 8 und
- Fig. 12: in drei Einzeldarstellungen Arbeitsschritte für das erstmalige Herstellen und das Lösen einer Verbindung mit Hilfe eines Verbindungssystems nach Fig. 8.

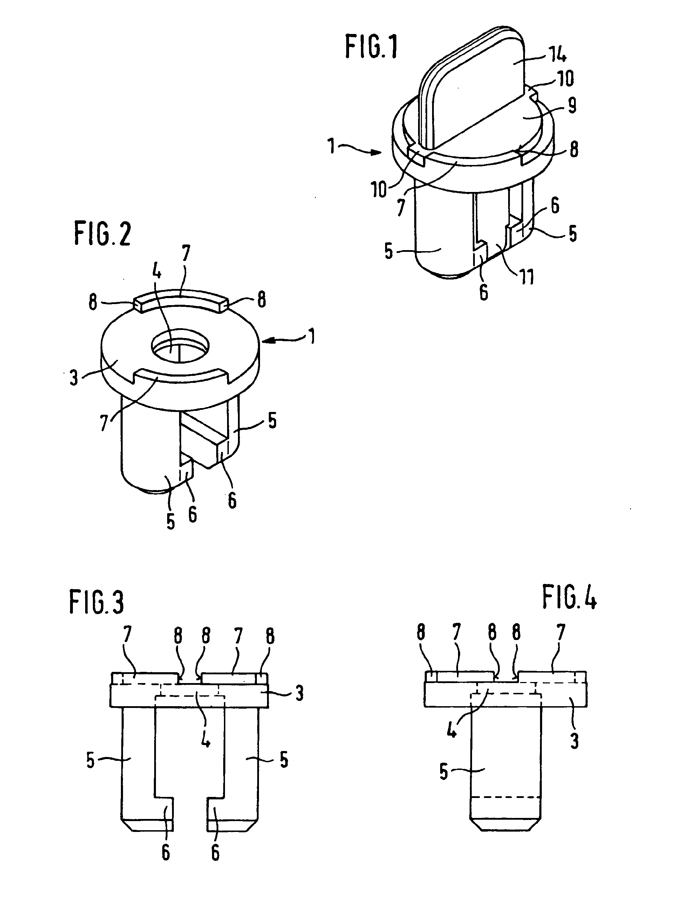

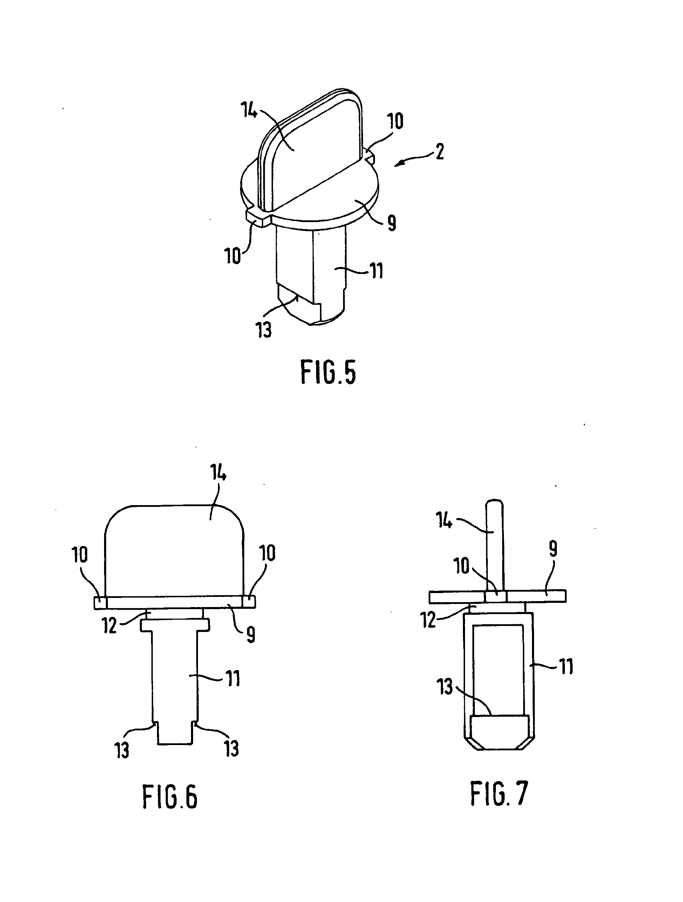

Fig. 1 zeigt ein erstes Ausführungsbeispiel eines Verbindungssystems, das nach dem weiter unten erläuterten Verfahren herstellbar ist. Es besteht aus einem Ankerteil **1** und einem Zapfenteil **2**, das mit dem Ankerteil **1** eine geschlossene Einheit bildet derart, dass es nach außen einstückig erscheint und bei seiner Anwendung auch so zu handhaben ist. Wie aus den Fig. 2 bis 4 deutlicher zu ersehen ist, besteht das Ankerteil **1** aus einer mit einer zentrischen, kreisrunden Öffnung **4** versehenen Scheibe **3**, von der nach unten und nach innen versetzt zwei, einander gegenüberstehende Klauen **5** abragen, die an ihren freien Enden jeweils einen nach innen weisenden Ansatz **6** aufweisen. An der Oberseite der Scheibe **3** sind, einer Kreislinie folgend, zwei einander gegenüberliegende Fortsätze **7** angeformt, die an ihren jeweiligen Enden Anschläge **8** bieten. Das Zapfenteil **2** besteht, wie aus den Fig. 5 bis 7 ersichtlich, aus einer kreisrunden Platte **9**, von der seitlich diametral zwei Stopper **10** abragen. Aus der Mitte der Platte **9** ragt nach unten der Zapfen **11** ab. Dieser hat einen rechteckigen Querschnitt und ist über einen kreisrunden, hinterschnittenen Halsabschnitt **12** mit der Platte **9** verbunden; sein freies Ende weist an den Breitseiten Abstufungen **13** auf. An der Oberseite der Platte **9** ist ein Drehgriff **14** angeformt.

Wie in Fig. 1 zu erkennen, sind das Ankerteil **1** und das Zapfenteil **2** so miteinander verbunden, dass sich der Zapfen **11** des Zapfenteils **2** zwischen den Klauen **5** des Ankerteils **1** befindet und die Platte **9** auf der Scheibe **3** aufliegt. Der kreisrunde Halsabschnitt **12** befindet sich innerhalb der kreisrunden Öffnung **4**. So lässt sich das Zapfenteil **2** mit Hilfe des Drehgriffs **14** in zwei um 90° versetzte Stellungen drehen. Die Drehung wird durch den Anschlag der vom Zapfenteil **2** seitlich abragenden Stopper **10** an den Anschlagsflächen **8** der teilringförmigen Fortsätze **7** des Ankerteils **1** in beiden Richtungen begrenzt. In der einen dieser Stellungen, die man als Grundstellung bezeichnen kann, sitzt der Zapfen **11** mit seinen seitlichen Abstufungen **13** auf den Ansätzen **6** der Klauen **5** auf, die Schmalseite des abgestuften Endes des Zapfens **2** füllt den Abstand zwischen den Ansätzen **6** der Klauen **5** nahezu aus. Wird das Zapfenteil **2** innerhalb der Öffnung **4** des Ankerteils **1** um 90° gedreht, so gelangt die Breitseite des abgestuften Zapfenendes zwischen die Ansätze **6** der Klauen **5**, wodurch letztere aufgespreizt werden.

Bei der Anwendung des Verbindungsystems wird dieses in seiner Grundstellung mit den Klauen **5** und dem zwischen ihnen eingeschlossenen Zapfen **11** in die aufeinander ausgerichteten Verbindungslöcher der zu verbindenden Bauteile eingesetzt, anschließend wird das Zapfenteil **2** um 90° gedreht und mit der dabei erfolgenden Spreizung der Klauen **5** die Verbindung vollzogen und verriegelt.
Um die Verbindung wieder zu lösen, wird das Zapfenteil **2** um 90° in seine Grundstellung zurückgedreht, so dass die Klauen **5** elastisch in die Grundstellung zurückkehren können und das Verbindungssystem am Drehgriff **14** aus den Verbindungslöchern herausgezogen werden kann. Das Verbindungssystem bleibt dabei völlig unbeschädigt und unverändert für die Herstellung einer neuen oder anderen Verbindung einsetzbar.

Das Verbindungssystem wird als Ganzes, so wie es in Fig. 1 dargestellt ist, nach einem neuen, besonderen Spritzgussverfahren hergestellt, das als Abformung oder Über-Spritzgussverfahren bezeichnet werden kann. Wesentlich ist dabei, dass für die beiden relativ zueinander verdrehbaren Einzelteile, hier also das Ankerteil **1** und das Zapfenteil **2**, zwei verschiedene Kunststoffmaterialien verwendet werden, die zueinander nicht adhärent sind. Es wird dabei zunächst das innere Teil, hier das Zapfenteil **2**, in einer Form aus dem einen Material gegossen. Nach dem Erstarren dieses inneren Teils (Zapfenteils 2) wird in einem zweiten Arbeitsgang das äußere Teil, hier das Ankerteil **1**, aus dem anderen Material, das zum ersten nicht adhärent bzw. nicht anhaftend ist, über das erste oder um das erste Teil herumgegossen, wobei das erste Teil den Gusskern für das zweite Teil bildet. Die gegenseitige Verdrehbarkeit der beiden Teile wird dabei durch die Wahl der Materialien, d.h. durch deren Eigenschaft, nicht aneinander anzuhaften gewährleistet. Außerdem müssen die Materialien für die beiden Teile so gewählt werden, dass sie die für ihre Funktion richtige Eigenschaft haben. Das Ankerteil **1** wird aus einem vergleichsweise weichen, elastischen Material hergestellt, das eine Verformung bzw. die Spreizung der Klauen **5** und somit die Verankerung des Verbindungssystems in der Verbindungsstelle zulässt; die Spreizung muss sich aber auch wieder zurückbilden können, wenn die Spreizkraft aufgehoben wird. Für das Zapfenteil **2** wird ein steifes Material gewählt, damit der Zapfen **11** diese Spreizkraft auf die Klauen **5** wirkungsvoll ausüben kann.

Nach dem beschriebenen Verfahren werden also nicht mehr separate Teile gegossen, die anschließend in einem vorbereitenden Arbeitsgang für ihre Verwendung oder unmittelbar bei ihrer Verwendung erst zusammengefügt werden müssen, sondern es entsteht direkt beim Gießen oder Spritzgießen die fertige, sofort einsatzfähige Einheit. Die den Einsatz vorbereitende Arbeit des Zusammenfügens wird eingespart, der Einsatz selbst erleichtert und beschleunigt.

Die mechanische Haltbarkeit oder Festigkeit einer mit dem Verbindungssystem hergestellten Verbindung hängt stark ab von der Form des Ankerteils 1 bzw. deren Klauen **5**, die diese unterhalb der zu verbindenden Bauteile annehmen oder aufweisen. Es lassen sich die verschiedensten Formen für das Ankerteil **1** oder auch für das Zapfenteil **2** entwickeln und nach dem beschriebenen Verfahren herstellen, um die Haltbarkeit oder Festigkeit der durch die Verformung am Ankerteil **1** erreichten Verbindung zu gewährleisten oder zu verbessern.

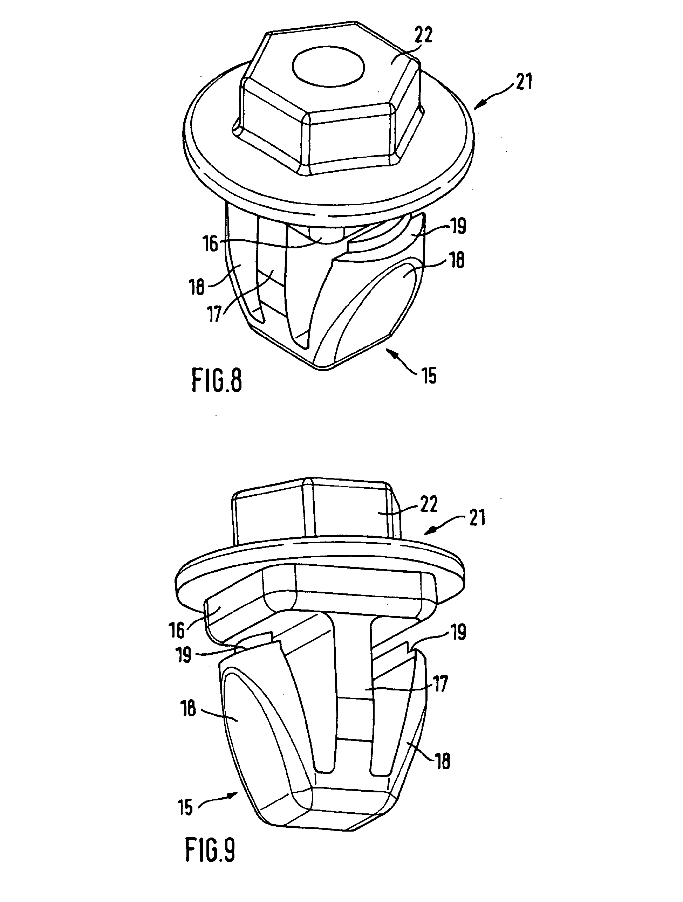

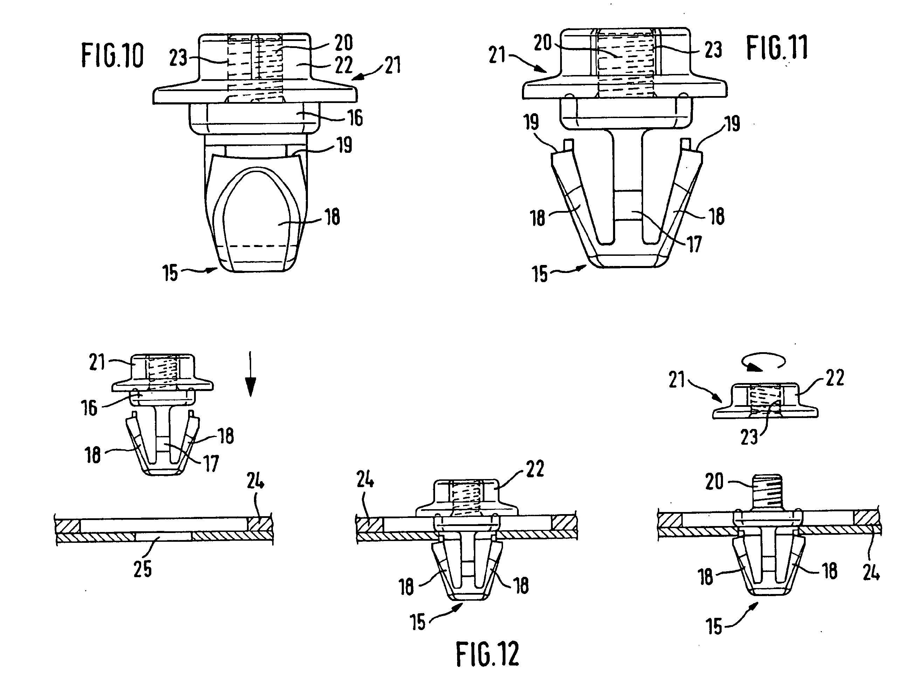

Die Fig. 8 bis 11 zeigen ein anders geformtes Verbindungssystem, das ebenfalls aus zwei zueinander verdrehbaren Teilen besteht und nach demselben Verfahren herstellbar ist. Der Anker **15** besteht hier aus einer rechteckigen Scheibe **16**, von der nach unten ein flacher Dorn **17** abragt. Vom Ende dieses Dorns **17** erstrecken sich zwei Flügel **18** aufspreizend in Richtung auf die Scheibe **16**. An den freien Enden der Flügel **18** ist jeweils eine Abstufung **19** vorgesehen. An der Oberseite der Scheibe **16** ist in der Mitte ein kurzer Stiel **20** mit Außengewinde angeformt (siehe dazu auch Fig. 12). Eine Kappe **21** mit Drehknopf **22** weist ein mittiges Sackloch **23** mit Innengewinde auf; so ist die Kappe **21** auf dem Stiel **20** drehbar.

Auch dieses Verbindungssystem wird nach dem oben beschriebenen Verfahren hergestellt. Zunächst wird in einer Form der Anker **15** gegossen und nach dem Erstarren des Ankers **15** die Kappe **21** über den Stiel **19** bzw. um ihn herum gegossen, wobei der Stiel **19** mit Außengewinde den Gusskern bildet, so dass sich von selbst in der Kappe **21** das Sackloch **23** mit Innengewinde bildet. Wiederum werden Anker **15** und Kappe **21** aus zwei verschiedenen Materialien gegossen, die zueinander nicht adhärent sind, so dass die Verdrehbarkeit der Kappe **21** auf dem Stiel **19** gewährleistet ist. Das Material für den Anker **15** ist dabei so zu wählen, dass die beiden von der Spitze des Dorns **17** ausgehenden Flügel **18** sich elastisch biegen lassen. Anker **15** und Kappe **21** werden nicht als separate Teile hergestellt, die zusammengeschraubt werden müssten, sondern das Verbindungssystem verlässt auch hier das Herstellungsverfahren als fertige Einheit.

In Fig. 12 ist in drei Einzeldarstellungen die Anwendung dieses Verbindungssystems dargestellt. Im ersten Bild sind zunächst zwei plattenförmige Bauteile **24** mit durchgehenden Verbindungslöchem **25**, die aufeinander zu erkennen. In dem dargestellten, speziellen Fall soll später das obere Bauteil lateral zum unteren Bauteil bewegt werden können, weshalb das Verbindungsloch **25** des oberen Bauteils als Langloch ausgebildet ist. Das Verbindungssystem wird, so wie es aus der Fertigung kommt, in Pfeilrichtung von oben in die Verbindungslöcher **25** ein-und soweit durchgeschoben, bis die Scheibe **16** aufsitzt. Dabei werden die von der Spitze des Dorns **17** ausgehenden Flügel **18** zunächst elastisch aufeinander zugebogen, um sich beim durchdringen der Verbindungslöcher **25** wieder zu spreizen und das unter Bauteil **24** mit ihren Abstufungen **19** zu untergreifen, wie es im zweiten Bild zu sehen ist. Im speziellen Fall kommt dabei die Kappe **21** mit ihrem Rand an den Längskanten des Langlochs **25** im oberen Bauteil **24** zur Auflage. Durch Drehen der Kappe **21** wird die Verbindung festgezogen. Wenn die Scheibe **16** des Verbindungsystems rechteckig ausgebildet ist, können deren Seitenflächen bei der möglichen Lateralbewegung vorteilhaft als Führung im Langloch **25** dienen.

Um die Verbindung bei Bedarf zu lösen, wird, wie im dritten Bild gezeigt, lediglich die Kappe **21** vom Stiel **20** abgeschraubt. Danach kann das obere Bauteil bequem nach oben abgehoben werden. In umgekehrter Weise lässt sich danach die Verbindung ebenso bequem und einfach auch wieder herstellen. Das Verbindungssystem bleibt intakt und wiedereinsetzbar.

## Patentansprüche

1. Verbindungssystem mit wenigstens einem inneren und einem äußeren Kunststoffteil, die funktional relativ zueinander drehbeweglich sind, wobei das innere Kunststoffteil oder zumindest ein Teil davon der Kern für das äußere Kunststoffteil ist und die beiden Kunststoffmaterialien nicht adhärent oder aneinander haftend sind, wobei das äußere Kunststoffteil ein Ankerteil (**1**) und das innere Kunststoffteil ein zu dem Ankerteil (**1**) verdrehbares inneres Zapfenteil (**2**) ist und wobei das Ankerteil (**1**) einen Zapfen (**11**) des Zapfenteils (**2**) fassende Klauen (**5**) aufweist, die durch eine Drehung des Zapfenteils (**2**) relativ zum Ankerteil (**1**) elastisch spreizbar sind, **dadurch gekennzeichnet, dass** das äußere Kunststoffteil und das innere Kunststoffteil aus verschiedenen Kunststoffmaterialien hergestellt sind, wobei das Zapfenteil (**2**) aus einem harten Material und das Ankerteil (**1**) aus einem vergleichsweise weichen, elastischen Material mit Rückstellkraft besteht.

2. Verbindungssystem nach Anspruch 1, **dadurch gekennzeichnet, dass** das Ankerteil (**1**) aus einer Scheibe (**3**) besteht, von der nach unten zwei einander gegenüberstehende Klauen (**5**) abragen, und dass der Zapfen (**11**) des verdrehbaren Zapfenteils (**2**) zwischen diesen Klauen (**5**) gefasst ist und einen rechteckigen Querschnitt aufweist.

3. Verbindungssystem nach Anspruch 1 oder Anspruch 2, **dadurch gekennzeichnet, dass** die Verdrehbarkeit des Zapfenteils (**2**) relativ zum Ankerteil (**1**) durch Anschläge auf 90° begrenzt ist.

4. Verbindungssystem nach Anspruch 3, **dadurch gekennzeichnet, dass** an der Oberseite der Scheibe (**3**) des Ankerteils (**1**) einer Kreislinie folgende Fortsätze (**7**) angeformt sind, die die Verdrehbarkeit des Zapfenteils (**2**) begrenzende Anschläge (**8**) für am Zapfenteil (**2**) ausgebildete Stopper (**10**) bieten.

## Claims

1. Connecting system having at least one inner and one outer plastics part which are movable in rotation relative to one another for functional purposes, the inner plastics part or at least a part thereof being the core for the outer plastics part and the two plastics materials not being adherent or mutually cohesive, the outer plastics part being an anchoring part (1) and the inner plastics part being an inner shanked part (2) rotatable relative to the anchoring part (1) and the anchoring part (1) having claws (5) which grip a shank (11) of the shanked part (2) and which can be spread apart elastically by rotation of the shanked part (2) relative to the anchoring part (1), **characterised in that** the outer plastics part and the inner plastics part are made of different plastics materials, the shanked part (2) being composed of a hard material and the anchoring part (1) of a comparatively soft, elastic material which exerts a recovery force.

2. Connecting system according to claim 1, **characterised in that** the anchoring part (1) comprises a disc (3) from which two claws (5) positioned opposite one another project downwards, and **in that** the shank (11) of the rotatable shanked part (2) is gripped between these claws (5) and is rectangular in cross-section.

3. Connecting system according to claim 1 or claim 2, **characterised in that** the rotatability of the shanked part (2) relative to the anchoring part (1) is limited to 90° by abutments.

4. Connecting system according to claim 3, **characterised in that** integrally formed on the upper side of the disc (3) of the anchoring part (1) are extensions (7) which follow a circular path and which provide abutments (8), limiting the rotatability of the shanked part (2), for stopping members (10) formed on the shanked part (2).

## Revendications

1. Système d'assemblage se composant au moins d'un élément intérieur et d'un élément extérieur en matière plastique qui, en vertu de leur principe de fonctionnement, sont destinés à tourner l'un par rapport à l'autre, l'élément intérieur en matière plastique ou au moins une partie de celui-ci faisant en l'occurrence office de noyau pour l'élément en matière plastique extérieur et les deux matières plastiques ne présentant pas de propriétés d'adhérence ou n'ayant pas la possibilité d'adhérer l'une à l'autre, l'élément en matière plastique extérieur étant en l'occurrence un élément d'ancrage (1) et l'élément en matière plastique intérieur un élément formant tourillon (2) susceptible de tourner par rapport à l'élément d'ancrage (1) et l'élément d'ancrage (1) comportant en l'occurrence des griffes (5) enserrant le corps (11) de l'élément formant tourillon (2) qui, sous l'action d'un mouvement de rotation imparti à l'élément formant tourillon (2) par rapport à l'élément d'ancrage (1) peuvent s'écarter par cédage élastique, **caractérisé en ce que** l'élément extérieur en matière plastique et l'élément intérieur en matière plastique sont fabriqués à partir de matières plastique différentes, l'élément formant tourillon (2) étant en l'occurrence réalisé dans une matière plastique dure et l'élément d'ancrage (1) dans une matière plastique élastique comparativement plus tendre capable de reprendre sa for initiale par retour élastique.

2. Système d'assemblage selon la revendication 1, **caractérisé en ce que** l'élément d'ancrage (1) se compose d'un disque (3), depuis lequel deux griffes (5) se faisant respectivement face font saillie vers le bas et **en ce que** le corps (11) de l'élément formant tourillon (2) susceptible de tourner est enserré entre ces griffes (5) et présente une section transversale de forme rectangulaire.

3. Système d'assemblage selon la revendication 1 ou la revendication 2, **caractérisé en ce que** le débattement en rotation de l'élément formant tourillon (2) par rapport à l'élément d'ancrage (1) est limité à 90° par des butées.

4. Système d'assemblage selon la revendication 3, **caractérisé en ce qu'**il est prévu, réalisées solidaires par moulage de la partie supérieure du disque (3) de l'élément d'ancrage (1) des protubérances en forme d'arc de cercle (7), qui définissent des butées (8), limitant l'amplitude du débattement de rotation de l'élément formant tourillon (2), pour des taquets d'arrêt prévus à cet effet sur l'élément formant tourillon (2).
